# EUROPEAN PATENT APPLICATION

(11) **EP 4 574 390 A1**
(43) Date of publication of application: **25.06.2025**
(21) Application number: 23939028.9
(22) Date of filing: 09.06.2023
(51) Int. Cl.: B29C 45/14, B29D 33/00, F16C 33/20

(54) **METHOD FOR MANUFACTURING SLIDING BEARING, AND SLIDING BEARING**

(30) Priority: 31.05.2023 CN 202310636401
(71) Applicant: Zhejiang CSB Plastic Bearing Technology Co., Ltd., Jiaxing, Zhejiang 314100 (CN)
(72) Inventor: MA, Zanbing, Jiaxing, Zhejiang 314100 (CN); SHEN, Haojie, Jiaxing, Zhejiang 314100 (CN); YAN, Yimin, Jiaxing, Zhejiang 314100 (CN)
(74) Representative: Ipside
(86) International application number: PCT/CN2023/099314
(87) International publication number: WO 2024/244044

(57) **Abstract**

Provided are a manufacturing method for a sliding bearing, and the sliding bearing, relating to the technical field of manufacturing methods for the sliding bearing. The manufacturing method for the sliding bearing includes the following steps:
a. weaving a tubular fabric or a fabric cloth with a certain width by using a fiber group including polytetrafluoroethylene fiber;
b. cutting the tubular fabric or the fabric cloth to form a wear-resistant layer, where the wear-resistant layer of the sliding bearing is formed by cutting the tubular fabric or the fabric cloth according to an actual situation due to the different sizes of sliding bearings; and
c. installing the cut wear-resistant layer in a mold, filling thermoplastic into the mold by an injection molding process, and cooling to form a solid load-carrying layer; and
d. demolding to form the sliding bearing.

Thus, the wear-resistant layer of the bearing is formed by weaving into the tubular fabric or the fabric cloth, and meanwhile, and a load-carrying layer with high load-carrying capacity is formed by using high-strength thermoplastic, the manufacturing cost of the sliding bearing is reduced, and manufacturing step is reduced, and the time is saved.

## Description

### Technical Field

The present disclosure relates to the technical field of manufacturing methods for the sliding bearing, and in particular to a manufacturing method for a sliding bearing, and the sliding bearing.

### Background of the Invention

At present, most plastic sliding bearings with good wear resistance are made of plastic composites with wear resistance by injection molding or molding process. Plastic composites are based on thermoplastic or thermosetting resin, and show good wear resistance and load-carrying capacity by adding organic or inorganic antifriction components and chopped fiber reinforcement components. Such plastic sliding bearings have a series of excellent characteristics, such as antifriction, self-lubrication, wear resistance, corrosion resistance, shock absorption, noise reduction, low relative density, specific strength, and simple processing. However, the plastic composites with good wear resistance and load-carrying capacity have not only high plastic matrix cost but also relatively high antifriction filler cost. Moreover, due to the main consideration of the wear resistance of the sliding bearing, the plastic matrix is used as the composites of the sliding bearing, and the key filling is the antifriction material instead of a fiber reinforced material capable of improving the load carrying, leading to the limitation of the load carrying performance of the plastic sliding bearing. When these wear-resistant plastic composites are made into sliding bearings and then applied to the field of mechanical sliding, as long as the sliding bearing is worn away by a certain thickness in daily use (generally, the allowable limit wear is less than 0.25 mm), the sliding bearing will fail and need to be replaced with a new sliding bearing. In this case, most of the materials with high cost in the sliding bearing is wasted, leading to the increase of application cost.

Meanwhile, a fiber wound bearing has good wear resistance and high load-carrying capacity. Such a sliding bearing has a double-layer structure which includes a wear-resistant layer of an inner lining, and a load-carrying layer of an outer lining. The wear-resistant layer of the inner lining can be made of a fiber braided fabric with antifriction and wear-resistant properties or formed by winding direct fiber wound and epoxy resin, and a thickness of the wear-resistant layer of the inner lining generally ranges from 0.30 mm to 1.5 mm according to product requirements. The load-carrying layer of the outer lining is formed by winding fiber filaments with high strength characteristics, such as glass fiber or carbon fiber, and epoxy resin. As the fiber sound bearing adopts the two-layer structure, the inner lining has high material cost but thinner thickness, while the outer lining has lower cost but thinner thickness. Such a sliding bearing can reduce the cost of the direct material to a certain extent. However, the manufacturing process, due to the limitation, can only be used to manufacture a straight-cylindrical sliding bearing, has complicated manufacturing process and high material waste in the production process, which finally causes high comprehensive cost of the fiber wound bearing.

There is also a plastic-metal composite bearing with good wear resistance and high load-carrying performance. Such a sliding bearing has a three-layer structure, including a sliding layer made of plastic composites, an intermediate layer made of metal copper powder, and load-carrying layer which is a metal backing. The metal copper powder layer plays a role in firmly combining the plastic composites with the metal steel plate, and the sliding layer will not fall off during working. The thickness of the sliding layer made of the plastic composites generally ranges from 0.03 mm to 0.50 mm. The manufacturing process of such a plastic-metal composite bearing has many procedures and high cost. Moreover, due to the existence of the metal materials, the sliding bearing is heavy, and thus its application in outdoor as well as wet or corrosive places is greatly limited.

How to solve the technical problem that the complicated manufacturing process of a sliding bearing in the prior art leads to higher cost of the sliding bearing is the main problem solved by those skilled in the art.

### Summary of the Invention

An objective of the present disclosure is to provide a manufacturing method for a sliding bearing, and the sliding bearing, so as to solve the technical problem that the complicated manufacturing process of a sliding bearing in the prior art leads to higher cost of the sliding bearing. Many technical effects that can be produced by the preferred technical solution among many technical solutions provided by the present disclosure are set forth in detail below.

To achieve the objective above, the present disclosure employs the following technical solution:
The present disclosure provides a manufacturing method for a sliding bearing, including the following steps:
a. weaving a tubular fabric or a fabric cloth with a certain width by using a fiber group comprising polytetrafluoroethylene fiber;
b. cutting the tubular fabric or the fabric cloth to form a wear-resistant layer;
c. installing the wear-resistant layer in a mold, filling thermoplastic into the mold by an injection molding process, and cooling to form a solid load-carrying layer; and
d. demolding to form a sliding bearing.

Preferably, a pin for pressing an edge position of the fabric cloth is arranged in the mold.

Preferably, the fiber group further includes at least one of carbon fiber, aramid fiber, and thermoplastic fiber.

The present disclosure further provides a sliding bearing. The manufacturing method for a sliding bearing above is adopted, and the sliding bearing includes a wear-resistant layer and a load-carrying layer which are connected. The wear-resistant layer includes polytetrafluoroethylene fiber, and the load-carrying layer is made of thermoplastic.

Preferably, the wear-resistant layer includes a sliding layer and an adhesive layer which are connected, and the adhesive layer is connected to the load-carrying layer.

Preferably, a content of the polytetrafluoroethylene fiber in the sliding layer is greater than or equal to that of the polytetrafluoroethylene fiber in the adhesive layer.

Preferably, the fiber group further includes at least one of carbon fiber, aramid fiber, and thermoplastic fiber.

Preferably, the thermoplastic is one, or a composite material of one, of polyoxymethylene, polyamide, polybutylene terephthalate, polyethylene terephthalate, polyphenylene sulfide, polyethersulfone, polyetheretherketone, polypropylene, polyethylene, polyetherimide, polyvinylidene fluoride, and thermoplastic elastomer.

Preferably, the wear-resistant layer is provided with pores, and the load-carrying layer partially penetrates into the pores of the wear-resistant layer.

Preferably, the wear-resistant layer and the load-carrying layer are of an inner-outer wrapping structure, and/or an up-down structure.

The technical solution provided by the present disclosure includes the following beneficial effects:
The present disclosure provides a manufacturing method for a sliding bearing, and the sliding bearing. The manufacturing method for the sliding bearing includes the following steps:
a. A tubular fabric or a fabric cloth with a certain width is woven by using a fiber group including polytetrafluoroethylene fiber, this is because the polytetrafluoroethylene fiber has the advantages of high elongation rate, good chemical stability, better corrosion resistance than other synthetic fibers, waxy surface, small friction coefficient, and convenient sliding.
b. A wear-resistant layer is formed by cutting the tubular fabric or the fabric cloth, where the wear-resistant layer of the sliding bearing is formed by cutting the tubular fabric or the fabric cloth according to an actual situation due to the different sizes of sliding bearings.
c. The cut wear-resistant layer is installed in a mold, thermoplastic is filled into the mold by an injection molding process, and then cooled to form a solid load-carrying layer. As the wear-resistant layer is formed by weaving different fibers, pores are formed, the flowing thermoplastic can conveniently penetrate into the pores, such that the load-carrying layer and the wear-resistant layer can be bound together better to avoid the wear-resistant layer and the load-carrying layer from falling off.
d. Demolding is carried out to form a sliding bearing.

In this way, the wear-resistant fiber and polytetrafluoroethylene fiber with relatively small friction coefficient are woven into a tubular fabric or a fabric cloth to form a wear-resistant layer of the bearing, i.e., a working surface of the sliding bearing; meanwhile, high-strength thermoplastic is used to form a load-carrying layer. As the load-carrying layer does not need to have wear resistance, the cost of the sliding bearing is reduced, and the manufacturing cost of the sliding bearing is reduced. Due to the fiber and thermoplastic used in the sliding bearing, the weight of the product is reduced, which makes the sliding bearing lighter. Meanwhile, the sliding bearing can also be used in any working conditions, such as outdoor, a wet environment, and places where metallic magnetism is not allowed.

### Brief Description of the Drawings

To describe the technical solutions of the present disclosure or in the prior art more clearly, the following briefly introduces the accompanying drawings required for describing the embodiments or the prior art. Apparently, the accompanying drawings in the following description show merely some embodiments of the present disclosure, and those of ordinary skill in the art may still derive other drawings from these accompanying drawings without creative efforts.
FIG. 1 is a structural schematic diagram of a straight-cylindrical sliding bearing according to an exemplary embodiment;
FIG. 2 is a structural schematic diagram of a thrust sliding bearing according to an exemplary embodiment;
FIG. 3 is a structural schematic diagram of a flange sliding bearing according to an exemplary embodiment;
FIG. 4 is a structural schematic diagram of a straight-cylindrical sliding bearing according to an exemplary embodiment when arranged on a mold;
FIG. 5 is a structural schematic diagram of a thrust sliding bearing according to an exemplary embodiment when arranged on a mold;
FIG. 6 is a structural schematic diagram of a flange sliding bearing according to an exemplary embodiment when arranged on a mold;
FIG. 7 is a cutaway diagram of a thrust sliding bearing according to an exemplary embodiment;
FIG. 8 is a schematic diagram of the machining of a linear motion bearing according to an exemplary embodiment;
FIG. 9 is a sectional diagram of a linear motion bearing according to an exemplary embodiment.

In the drawings: 1-wear-resistant layer, 2-load-carrying layer; 3-sliding layer; 4-adhesive layer; 5-mold.

### Detailed Description of Embodiments

To make the objectives, technical solutions and advantages of the present disclosure more clearly, the following describes the technical solutions in the embodiments of the present disclosure in detail. Apparently, the described embodiments are merely a part rather than all of the embodiments of the present disclosure. All other embodiments obtained by a person of ordinary skill in the art based on the embodiments of the present disclosure without creative efforts shall fall within the protection scope of the present disclosure.

This specific embodiment provides a manufacturing method for a sliding bearing, and the sliding bearing. The technical problem that the complicated manufacturing process of a sliding bearing in the prior art leads to higher cost of the sliding bearing is solved.

The embodiment is described below with reference to the accompanying drawings. In addition, the embodiments shown below do not limit the present disclosure described in the claims in any way. Furthermore, the entire contents of the constitutions represented by the following embodiments are not limited to those necessary for the solution of the disclosure recorded in the claims appended herein.

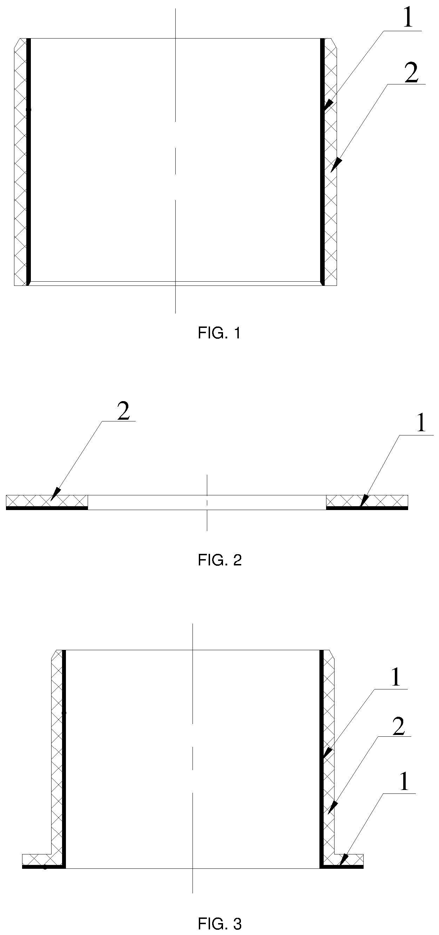

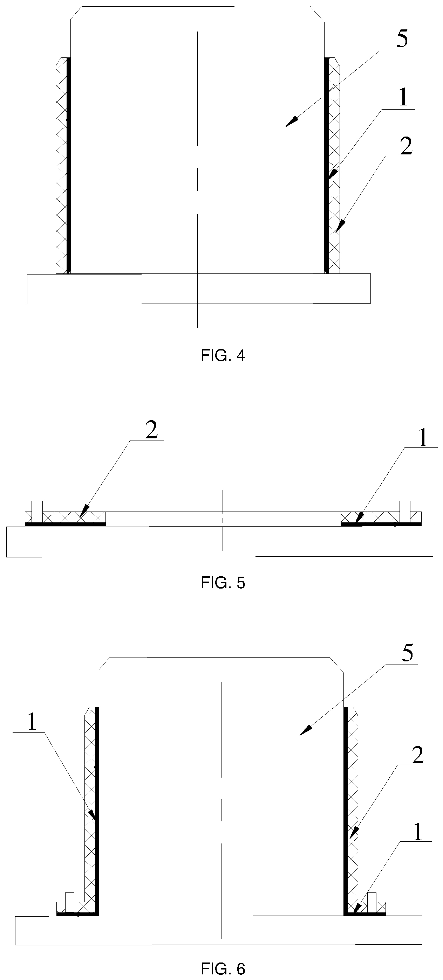

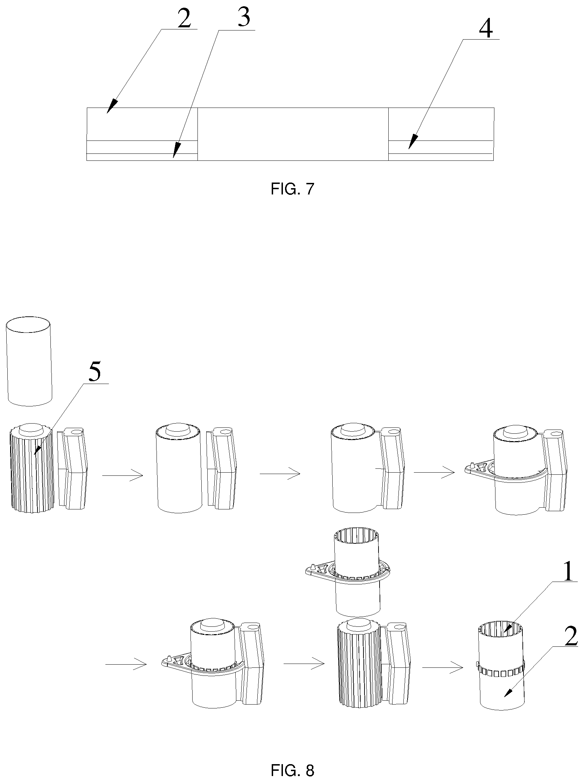

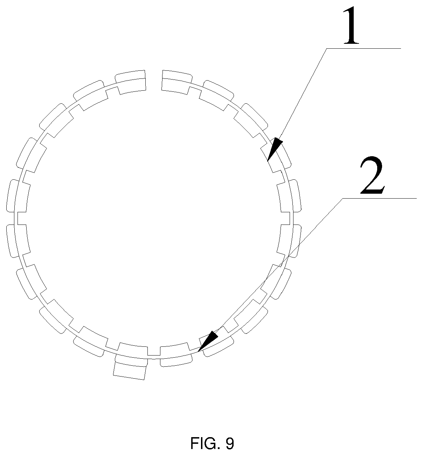

Referring to FIG. 1 to FIG. 9, the present disclosure provides a manufacturing method for a sliding bearing, including the following steps:
a. A tubular fabric or a fabric cloth with a certain width is woven by using a fiber group including polytetrafluoroethylene fiber, this is because the polytetrafluoroethylene fiber has the advantages of high elongation rate, good chemical stability, better corrosion resistance than other synthetic fibers, waxy surface, small friction coefficient, and convenient sliding.
b. A wear-resistant layer 1 is formed by cutting the tubular fabric or the fabric cloth, where the wear-resistant layer 1 of the sliding bearing is formed by cutting the tubular fabric or the fabric cloth according to an actual situation due to the different sizes of sliding bearings.
c. The cut wear-resistant layer 1 is installed in a mold 5, thermoplastic is filled into the mold 5 by an injection molding process, and then cooled to form a solid load-carrying layer 2. As the wear-resistant layer 1 is formed by weaving different fibers, pores are formed, the flowing thermoplastic can conveniently penetrate into the pores, such that the load-carrying layer 2 and the wear-resistant layer 1 can be bound together better to avoid the wear-resistant layer 1 and the load-carrying layer 2 from falling off.
d. Demolding is carried out to form the sliding bearing.

In this way, the wear-resistant fiber and polytetrafluoroethylene fiber with relatively small friction coefficient are woven into a tubular fabric or a fabric cloth to form a wear-resistant layer 1 of the bearing, i.e., a working surface of the sliding bearing; and meanwhile, high-strength thermoplastic is used to form a load-carrying layer 2. As the load-carrying layer 2 does not need to have wear resistance, the cost of the sliding bearing is reduced, and the manufacturing cost of the sliding bearing is reduced. Due to the fiber and thermoplastic used in the sliding bearing, the weight of the product is reduced, which makes the sliding bearing lighter. Meanwhile, the sliding bearing can also be used in any working conditions, such as outdoor, a wet environment, and places where metallic magnetism is not allowed.

In this embodiment, as the fabric cloth is relatively thin, when the mold 5 is filled with high-temperature flowing thermoplastic, the wear-resistant layer 1 placed in the mold 5 may be curled. In order to avoid such a situation, a pin for pressing an edge position of the fabric cloth is arranged in the mold 5, and specifically, the pin is distributed along the periphery of the fabric cloth. The mold 5 includes an upper mold, and a lower mold. The wear-resistant layer is arranged on the lower mold, and the pins are fixed to the upper mold. When the upper mold is closed to the lower mold, the pins of the upper mold are pressed against the fabric cloth.

In this embodiment, the fiber group further includes at least one of carbon fiber, aramid fiber, and thermoplastic fiber. That is, at least one of the carbon fiber, the aramid fiber and the thermoplastic fiber is woven with the polytetrafluoroethylene fiber. Due to the waxy feeling of the surface of PTFE fiber, the friction coefficient is small, and the sliding is convenient. The pursue of the lowest friction coefficient makes the content of the polytetrafluoroethylene fiber relatively high, which will lead to poor wear resistance. In order to ensure the wear resistance and low friction coefficient of the tubular fabric or the fabric cloth, other wear-resistant fibers are selected for mixed weaving, that is, the friction coefficient is reduced through the polytetrafluoroethylene, and the wear resistance is improved through other fibers.

Manufacturing steps of a straight-cylindrical sliding bearing are as follows:
1. The polytetrafluoroethylene fiber and carbon fiber (not limited to carbon fiber, but also at least one of aramid fiber and thermoplastic fiber) are woven into a continuous long tubular fabric by a weaving process.
2. The tubular fabric is cut into a wear-resistant layer 1 with an equivalent length of the sliding bearing according to a length of the sliding bearing.
3. The wear-resistant layer 1 is installed in the mold 5, and the wear-resistant layer is fixed to a mold core by using the micro-tensile property of the tubular fabric.
4. High-temperature thermoplastic is filled in the mold 5, and cooled to form a load-carrying layer 2, and the wear-resistant layer 1 is fixed to an inner-hole working surface of the straight-cylindrical sliding bearing.
5. Demolding is carried out to form the straight-cylindrical sliding bearing.

Manufacturing steps of a thrust sliding bearing are as follows:
1. The polytetrafluoroethylene fiber and carbon fiber (not limited to carbon fiber, but also at least one of aramid fiber and thermoplastic fiber) are woven into a continuous long fabric cloth with a certain width by a weaving process.
2. The fabric cloth is cut into a wear-resistant layer 1 according to an inner diameter and an outer diameter of the thrust sliding bearing.
3. The wear-resistant layer 1 is installed at the bottom of a mold core.
4. High-temperature thermoplastic is filled in the mold 5, and cooled to form a load-carrying layer 2, and the wear-resistant layer 1 is fixed to a working surface of the thrust sliding bearing.
5. Demolding is carried out to form the thrust sliding bearing.

If the wear-resistant layer 1 is thinner, or the hardness thereof is not enough to keep the original state during injection molding, at least one axial compression pin can be arranged in the mold 5 along a circumferential direction of the bearing, and the compression pin is closely attached to the wear-resistant layer 1 when the mold 5 is closed, thus preventing the wear-resistant layer 1 from wrinkle deformation.

Manufacturing steps of a flange sliding bearing are as follows:
1. The polytetrafluoroethylene fiber and carbon fiber (not limited to carbon fiber, but also at least one of aramid fiber and thermoplastic fiber) are woven into a continuous long tubular fabric by a weaving process.
2. The polytetrafluoroethylene fiber and carbon fiber (not limited to carbon fiber, but also at least one of aramid fiber and thermoplastic fiber) are woven into a continuous long fabric cloth with a certain width by a weaving process.
3. The tubular fabric is cut into a first wear-resistant layer with an equivalent length of the sliding bearing according to a length of the sliding bearing.
4. The fabric cloth is cut into a second wear-resistant layer according to an inner diameter and an outer diameter of the flange sliding bearing.
5. The second wear-resistant layer is installed at the bottom of the mold core, and then the first wear-resistant layer is fixed to a mold core by using the micro-tensile property of the fabric.
6. High-temperature thermoplastic is filled in the mold 5, and cooled to form a load-carrying layer 2, and the first wear-resistant layer is fixed to an inner-hole working surface of the sliding bearing, and the second wear-resistant layer is fixed to a flange working surface of the sliding bearing.

If the second wear-resistant layer is thinner, or the hardness thereof is not enough to keep the original state during injection molding, at least one axial compression pin can be arranged in the mold 5 along the circumferential direction of the flange, and the compression pin is closely attached to the second wear-resistant layer 1 when the mold 5 is closed, thus preventing the second wear-resistant layer 1 from wrinkle deformation.

Manufacturing steps of a linear motion bearing are as follows:
1. The polytetrafluoroethylene fiber and carbon fiber (not limited to carbon fiber, but also at least one of aramid fiber and thermoplastic fiber) are woven into a continuous long tubular fabric by a weaving process.
2. The tubular fabric is cut into a wear-resistant layer 1 with an equivalent length of the sliding bearing according to a length of the sliding bearing.
3. The wear-resistant layer is installed in the mold 5. Because the inner side of the linear motion bearing is concave-convex, and a side wall is provided with a gap, the mold 5 is provided with a protrusion corresponding to the gap for fixing.
4. High-temperature thermoplastic is filled in the mold 5, and then cooled to form a load-carrying layer 2, and the wear-resistant layer 1 is fixed to an inner-hole working surface of the straight-cylindrical sliding bearing.
5. Demolding is carried out, the wear-resistant layer is trimmed to form the linear motion bearing.

The outer surface of the mold core of the mold 5 are provided with grooves alternately. As a stopper is arranged in an extension direction of the mold core to abut against the mold core, the wear-resistant layer is further fixed. Meanwhile, the high-temperature thermoplastic material is injected into the mold at a middle position in a height direction of the mold, which can prevent the wear-resistant layer sleeved on the mold core from moving. Meanwhile, the wear-resistant layer is in fit with the concave-convex grooves on the mold core under the pressure of injection molding, that is, the wear-resistant layer forms grooves alternately.

The present disclosure further provides a sliding bearing, which is manufactured using the manufacturing method for a sliding bearing above, and includes a wear-resistant layer 1 and a load-carrying layer 2 which are connected. Because the wear-resistant layer 1 includes polytetrafluoroethylene fiber which has the characteristic of low friction coefficient, the friction coefficient of the wear-resistant layer 1 is greatly reduced. The load-carrying layer 2 is made of thermoplastic, which can greatly reduce the cost of the sliding bearing.

In order to guarantee the friction coefficient of the wear-resistant layer 1 while reducing the cost of the sliding bearing continuously, the wear-resistant layer 1 includes a sliding layer 3 and an adhesive layer 4 which are connected. The adhesive layer 4 is connected to the load-carrying layer 2, that is, the sliding layer 3 is a working surface, and the adhesive layer 4 is arranged between the sliding layer 3 and the load-carrying layer 2. The content of the polytetrafluoroethylene fiber in the sliding layer 3 is greater than that of the polytetrafluoroethylene fiber in the adhesive layer 4, that is, the adhesive layer 4 is a non-working surface, the content of the polytetrafluoroethylene fiber may be less or zero. As the price of the polytetrafluoroethylene fiber is high, the reduction of the content of the polytetrafluoroethylene fiber can greatly reduce the cost of the sliding bearing.

The thickness of the wear-resistant layer 1 is preferably 0.25-1.0 mm, which not only can ensure enough wear-resistant layer, but also can prevent the wear-resistant layer 1 from being too thick, thus reducing the cost of the sliding bearing.

In this embodiment, the wear-resistant layer 1 may include at least one of carbon fiber, aramid fiber, and thermoplastic fiber. When weaving the wear-resistant layer 1, in order to guarantee the wear resistance and small friction coefficient of the wear-resistant layer 1, the wear-resistant layer 1 is formed by binding the polytetrafluoroethylene fiber with the carbon fiber, the aramid fiber, or the thermoplastic fiber, which is limited to one of the fibers. Two or more fibers can be woven to form wear-resistant layer 1, and the introduction of the carbon fiber, the aramid fiber and the thermoplastic fiber is not listed here.

Preferably, the thermoplastic may be one, or a composite material of one, of polyoxymethylene, polyamide, polybutylene terephthalate, polyethylene terephthalate, polyphenylene sulfide, polyethersulfone, polyetheretherketone, polypropylene, polyethylene, polyetherimide, polyvinylidene fluoride, and thermoplastic elastomer. The load-carrying strength is guaranteed while reducing the cost. The composites are composites formed by adding other materials into the thermoplastic, such as adding fiber reinforcement or mineral reinforcement into pure polyamide to form polyamide composites.

In this embodiment, in order to facilitate the close connection between the wear-resistant layer 1 and the load-carrying layer 2, the wear-resistant layer 1 is provided with pores, and the load-carrying layer 2 can penetrate into the pores of the wear-resistant layer 1. The pores are formed by multiple fibers in the weaving process, and the high-temperature thermoplastic is filled into the pores of the wear-resistant layer 1 under the action of pressure, and then the load-carrying layer 2 and the wear-resistant layer 1 are only bound together.

In this embodiment, the wear-resistant layer 1 and the load-carrying layer 2 are of an inner-outer structure and/or an up-down structure. For different sliding bearings, the working surfaces are different. If the working surface of the straight-cylindrical sliding bearing is an inner ring, the wear-resistant layer 1 and the load-carrying layer 2 are of an inner-outer structure. If the working surface of the thrust sliding bearing is a lower end surface, the wear-resistant layer 1 and the load-carrying layer 2 are of an up-down structure. If the working surface of the flange sliding bearing is an inner ring and a lower end face, the wear-resistant layer 1 and the load-carrying layer 2 are of both the inner-outer structure and the up-down structure.

It should be understood that the orientation or positional relationship indicated by terms "center", "longitudinal", "transverse", "length", "width", "thickness", "upper", "lower", "front", "back", "left", "right", "vertical", "horizontal", "top", "bottom", "inside", "outside ", "clockwise" and "counterclockwise" is based on the orientation or positional relationship shown in the drawings only for convenience of description of the present disclosure and simplification of description rather than indicating or implying that the device or element referred to must have a particular orientation, be constructed and operate in a particular orientation, and thus are not to be construed as limiting the present disclosure. Furthermore, the terms "first", "second" and "third" are used for descriptive purposes only and are not to be construed as indicating or implying relative importance.

In the present disclosure, unless expressly specified and limited otherwise, it also should be noted that the terms "install", "connect" and "couple" should be understood broadly, e.g., may be a fixed connection, a detachable connection, or an integrated connection; may be a mechanical connection, or an electrical connection; may be a direct connection, or an indirect connection through an intermediate medium. For those of ordinary skill in the art, the specific meanings of the above terms in the present disclosure can be understood on a case-by-case basis.

The above is only the specific embodiment of the present disclosure, but the scope of protection of the present disclosure is not limited thereto. Any change or replacement that can be easily thought of by any person skilled in the art within the technical scope disclosed in the present disclosure should be covered by the scope of protection of the present disclosure. Therefore, the scope of protection of the present disclosure shall be subject to the that of the appended claims.

It can be understood that the same or similar parts in the above embodiments may refer to each other, and the content that is not explained in detail in some embodiments may refer to the same or similar parts in other embodiments. The multiple schemes provided in the present disclosure include their own basic schemes, which are independent of each other and do not restrict each other, but they can also be combined with each other without conflict to achieve multiple effects together.

Although the embodiments of the present disclosure have been shown and described above, it may be understood that the above embodiments are exemplary and cannot be construed as limitations of the present disclosure, and those skilled in the art can make changes, modifications, replacements and variations to the above embodiments within the scope of the present disclosure.

## Claims

1. A manufacturing method for a sliding bearing, comprising the following steps:
a. weaving a tubular fabric or a fabric cloth with a certain width by using a fiber group comprising polytetrafluoroethylene fiber;
b. cutting the tubular fabric or the fabric cloth to form a wear-resistant layer (1);
c. installing the wear-resistant layer (1) in a mold (5), filling thermoplastic into the mold (5) by an injection molding process, and cooling to form a solid load-carrying layer (2); and
d. demolding to form a sliding bearing.

2. The manufacturing method for a sliding bearing according to claim 1, wherein a pin for pressing an edge position of the fabric cloth is arranged in the mold (5).

3. The manufacturing method for a sliding bearing according to claim 1, wherein the fiber group further comprises at least one of carbon fiber, aramid fiber, and thermoplastic fiber.

4. A sliding bearing, wherein the manufacturing method for a sliding bearing according to any one of claims 1 to 3 is adopted, the sliding bearing comprises a wear-resistant layer (1) and a load-carrying layer (2) which are connected, the wear-resistant layer (1) comprises polytetrafluoroethylene fiber, and the load-carrying layer (2) is made of thermoplastic.

5. The sliding bearing according to claim 4, wherein the wear-resistant layer (1) comprises a sliding layer (3) and an adhesive layer (4) which are connected, and the adhesive layer (4) is connected to the load-carrying layer (2).

6. The sliding bearing according to claim 5, wherein a content of the polytetrafluoroethylene fiber in the sliding layer (3) is greater than or equal to that of the polytetrafluoroethylene fiber in the adhesive layer (4).

7. The sliding bearing according to claim 4, wherein the fiber group further comprises at least one of carbon fiber, aramid fiber, and thermoplastic fiber.

8. The sliding bearing according to claim 4, wherein the thermoplastic is one, or composites of one, of polyoxymethylene, polyamide, polybutylene terephthalate, polyethylene terephthalate, polyphenylene sulfide, polyethersulfone, polyetheretherketone, polypropylene, polyethylene, polyetherimide, polyvinylidene fluoride, and thermoplastic elastomer.

9. The sliding bearing according to claim 4, wherein the wear-resistant layer (1) is provided with pores, and the load-carrying layer (2) partially penetrates into the pores of the wear-resistant layer (1).

10. The sliding bearing according to claim 4, wherein the wear-resistant layer (1) and the load-carrying layer (2) are of an inner-outer wrapping structure, and/or an up-down structure.
